# EUROPEAN PATENT SPECIFICATION

(11) **EP 3 984 148 B1**
(45) Date of publication and mention of the grant of the patent: **23.04.2025**
(21) Application number: 20732911.1
(22) Date of filing: 17.06.2020
(51) Int. Cl.: H04B 10/70, G02B 6/293

(54) **ALIGNMENT OF AN ENTANGLED PHOTON SOURCE**
AUSRICHTUNG EINER VERWICKELTEN PHOTONENQUELLE
ALIGNEMENT D'UNE SOURCE DE PHOTONS ENCHEVÊTRÉE

(30) Priority: 17.06.2019 EP 19180652
(43) Date of publication of application: 20.04.2022
(73) Proprietor: Österreichische Akademie der Wissenschaften, 1010 Wien (AT)
(72) Inventor: STEINLECHNER, Fabian, 07745 Jena (DE)
(74) Representative: Louis Pöhlau Lohrentz
(86) International application number: PCT/EP2020/066729
(87) International publication number: WO 2020/254384

(56) References cited:
- US-B1- 6 424 665
- US-B1- 6 897 434
- HEONOH KIM ET AL: "Pulsed Sagnac source of polarization-entangled photon pairs in telecommunication band", ARXIV.ORG, CORNELL UNIVERSITY LIBRARY, 201 OLIN LIBRARY CORNELL UNIVERSITY ITHACA, NY 14853, 30 March 2019 (2019-03-30), XP081160057
- BECKERT ERIK ET AL: "A space-suitable, high brilliant entangled photon source for satellite based quantum key distribution", PROCEEDINGS OF SPIE, SPIE, 1000 20TH ST. BELLINGHAM WA 98225-6705 USA, vol. 10910, 4 March 2019 (2019-03-04), pages 1091016 - 1091016, XP060118830, ISSN: 0277-786X, ISBN: 978-1-5106-2687-4, DOI: 10.1117/12.2507603

## Description

The invention concerns a method to align a Sagnac loop for an entangled photon source according to claim 1 and a Sagnac loop with an apparatus to provide an aligned Sagnac loop for an entangled photon source according to claim 10.

Entangled photon sources are well known for example as a BBO source from US 6 424 665 B1 or as Sagnac ppKTP type-II source from "A space-suitable, high brilliant entangled photon source for satellite base quantum key distribution" or as a pulsed type-0 PPLN source from "Pulsed Sagnac source of polarization-entangled photon pairs in telecommunication band" or as fiber Sagnac configuration from US 6 897 434 B1. From Heonoh Kim et al: "Pulsed Sagnac source of polarization-entangled photon pairs in telecommunication band" arXiv.1904.00164 a polarization-entangled photon source with a Sagnac configuration is known. From Becker Erik et al: "A space-suitable, high brilliant entangled photon source for satellite based quantum key distribution" Proc. SPIE 10910, Free-Space Laser Communications XXXI, page 1091016 a space-suitable entangled photon source with a Sagnac-interferometer is known. For a free-space entangled photon source the alignment of the Sagnac loop is of crucial importance.

An objective of the present invention is to provide an improved and more precise method to align a Sagnac loop for an entangled photon source and to provide a Sagnac loop for an entangled photon source with an apparatus for the alignment.

The method to align a Sagnac loop for an entangled photon source is achieved according to claim 1 by the steps of providing:
I) first arrangement of optical components in a Sagnac loop configuration, wherein the optical components comprise of
   - a first light source emitting a polarized photon beam, and
   - the Sagnac loop, formed by a first polarizing element which is a first polarizing beam splitter, and two mirrors arranged in a first and second output path of the first polarizing beam splitter, forming a clockwise and counter-clockwise path for the photon beam behind the first polarizing beam splitter, wherein the polarized photon beam of the first light source enters the first polarizing beam splitter on a third or fourth output path,
II) one or more optimization steps performed by a tip/tilt movement of the two mirrors and an observation of the clockwise and counter-clockwise beams in an output path of a second and/or third polarizing beam splitter, preferably a reflection output path, in order to optimize the spatial overlap of the clockwise and counter-clockwise photon beams in the Sagnac loop.

According to the invention the second and/or third polarizing beam splitter is arranged in the third and/or fourth output path of the first polarizing beam splitter, and the observation in the output path of the second and/or third polarizing beam splitter is performed by a measurement of the optical power of the clockwise and counter-clockwise photon beams with a power-meter, and/or a detection of the interference pattern of the clockwise and counter-clockwise photon beams with a camera or an optical component with a surface to monitor the interference.

This object is further achieved by a Sagnac loop with an apparatus to provide an aligned Sagnac loop for an entangled photon source according to claim 10,
wherein the Sagnac loop, formed by a first polarizing element which is a first polarizing beam splitter, and two mirrors arranged in a first and second output path of the first polarizing beam splitter, forming a clockwise and counter-clockwise path for the photon beam behind the first polarizing beam splitter,
wherein the apparatus comprises
   - a first light source emitting a polarized photon beam,
   - a second polarizing beam splitter, wherein the second polarizing beam splitter is arranged in the third or fourth output path of the first polarizing element, whereas on a reflecting output path of the second polarizing beam splitter
      a) a camera to measure the interference, or
      b) an optical component with a surface to monitor the interference, or
      c) a power meter to measure the power,
   is arranged.

A polarizing beam splitter comprises four sides, on each side a corresponding output and input path for the polarized photon beam and the down conversion photon beam is assigned. Input path means that a beam enters the polarizing beam splitter on this side. Output path means that a beam exits the polarizing beam splitter on this side. The polarizing beam splitter splits a photon beam into two, whereas the reflected photon beam is vertically polarized (V) and the transmitted photon beam is horizontally polarized (H).

The two mirrors of the Sagnac loop are arranged in a first and second output path of the first polarizing beam splitter. The polarized photon beam enters the first polarizing beam splitter on a third input path and can be split in two polarized photon beams with vertical polarization and horizontal polarization. The transmitted polarized photon beam (horizontal polarization) exits the first polarizing beam splitter on the first output path and travels in counter-clockwise direction and is guided by the mirrors into the second input path of the first polarizing beam splitter. The reflected polarized photon beam (vertical polarization) exits the first polarizing beam splitter on the second output path and travels in clockwise direction and is guided by the mirrors into the first input path of the first polarizing beam splitter. For an aligned Sagnac loop the first and second input and output paths (meaning the clockwise and counter clockwise directions) of the polarized photon beams overlap spatially. To pump the Sagnac loop in both directions (clockwise and counter clockwise) the polarized photon beam in front of the first polarizing beam splitter can have any other polarization but not pure linear horizontal or vertical polarized. This can be achieved and can be controlled by a half-wave plate and/or a quarter-wave plate and/or a polarizer in front of the first polarizing beam splitter.

Tip-tilt or so called two axes tilt means a movement of the mirror around two axes (preferably horizontal and vertical) where each movement around one axis can be performed independently. By a tip-tilt movement of the two mirrors in the Sagnac loop the polarized photon beams of the clockwise and counter-clockwise direction can be brought to a spatial overlap.

The first arrangement of the optical components in a Sagnac loop configuration means that the clockwise and counter-clockwise paths of the polarized photon beams in the Sagnac loop are guided at least to meet the first polarizing beam splitter in the first and second input path. It means at least one Sagnac loop should be formed by the components. In the optimization steps the clockwise and counter-clockwise path are successive brought to a spatial overlap by the tip-tilt movement of the mirrors.

In a preferred embodiment of the method a polarization flip element, preferably a half-wave plate or a dual wavelength half-wave plate is arranged inside the loop. In this configuration, which is the operational setting for producing entanglement, any light entering the Sagnac loop through a particular input path of the first polarizing beam splitter, will exit through the same path. As a result, the pump light will emerge again from the port it initially entered via but with its polarization state flipped. To facilitate the first alignment of the Sagnac loop, the polarization flip element can be removed or placed in a polarization neutral setting. In this case the light will exit through the initially un-used output path (i.e. the port that is not facing the input path or the two-forming part of the Sagnac loop). In the operational setting, a polarizing element in the pump input path can also be used to inspect the pump light.

In a preferred embodiment of the method the tip/tilt movement of the mirrors and a detection and/or minimization of the interference in the reflection output of the second and/or third polarizing beam splitter arranged at the third or fourth side of the first polarizing beam splitter is performed in order to optimize the spatial overlap of the clockwise and counter-clockwise propagation beams in the Sagnac loop.

One important finding is, that the measurement or detection of the counter-clockwise and clockwise propagating polarized photon beams (which correspond to two different polarizations) provides information on the alignment of the loop. This means if the loop is strongly misaligned, there will be two spots on the camera or any other optical component with a surface to monitor the beams and/or the interference; one for each of the two propagation paths (i.e. clockwise / counter-clockwise). These two beams can be brought to overlap by adjustment of the mirrors inside the loop. Once the beams overlap, the procedure proceeds with tests of the interference visibility. This interference is in the polarization state of the two beams; i.e. imperfect overlap results in a spatially varying polarization state of the beam emerging from the Sagnac loop. To make the spatial variation of the polarization state visible, the phase between the horizontal and vertical pump polarization components is translated to an intensity signal. This can be accomplished by placing a polarizing beam splitter outside of the Sagnac loop in the path of the polarized photon beams which are leaving the Sagnac loop, e.g. a polarizer, is added to the setup. This polarizer can be oriented at 45°, so that the linear horizontal beam (corresponding to clockwise / or counter-clockwise propagation inside the loop) and the linear vertical beam (corresponding to counter-clockwise / or counter propagation inside the loop) interfere to produce a spatially varying intensity pattern (i.e. interference pattern) after the polarizer.

The characteristic interference pattern after the polarizing beam splitter also provides information on the nature of the misalignment of the loop. For example, the number of fringes relates to the amount of angular misalignment. If these fringes are oriented vertically (horizontally), then the misalignment is mainly in the horizontal (vertical) plane. Typically, at the start of the alignment procedure, there will be many interference minima and maxima, which indicates periodically repeating polarization states across the beam. The alignment procedure thus aims to minimize the number of fringes. The goal of the alignment procedure is to have a single interference minimum that extends across the whole beam. In the case of optimal beam overlap, the superposition of the counter-clockwise and clockwise propagation pump beam components results in a uniform polarization state across the beam diameter. The shape and form of these fringes may also indicate other types of misalignment: for example, if the fringes are concentric rings then this may indicate transverse misalignment of the focus, that the focus of the beams is not at the centre of the Sagnac loop.

In a preferred embodiment of the method the tip/tilt movement of the two mirrors and a minimization or maximization of the measured optical power in the reflection output of the second and/or third polarizing beam splitter arranged at the third or fourth side of the first polarizing beam splitter is performed in order to optimize the spatial overlap of the clockwise and counter-clockwise propagation beams in the Sagnac loop.

In a preferred embodiment of the method the tip/tilt movement of the mirrors and a maximization of the measured optical power in the reflection output of the third polarizing beam splitter arranged at same side as the light source is performed in order to optimize the spatial overlap of the clockwise and counter-clockwise propagating beams in the Sagnac loop, wherein the third beam splitter is arranged between the light source and the first polarizing beam splitter, and wherein in addition between the third polarizing beam splitter and the first polarizing beam splitter a non-reciprocal optical device, preferably a Faraday-rotator, and a polarizer at 45° is arranged. Preferably the non-reciprocal optical device and the polarizer at 45° is a Faraday isolator or optical isolator.

A combination of a non-reciprocal optical device and polarizers may be used as an optical isolator. An optical isolator is a device that allows light to pass only in one direction, but deflects or absorbs light in the opposite direction. Optical isolators are frequently used in optical setups involving lasers in order to avoid detrimental - and potentially damaging - back-propagation of laser light from the optical setup into the laser cavity. Optical isolators based on the Faraday effect consist of a Faraday-rotator placed between two polarization filters oriented at a relative angle of 45°. These devices, also called Faraday isolators, allow light of a particular polarization to pass in one direction, while deflecting or absorbing light of any polarization that propagates in the opposite direction.

In a preferred embodiment of the method the Sagnac loop comprises a first polarized photon beam to align the Sagnac loop, whereby the Sagnac loop is formed by a first polarizing beam splitter, and two mirrors arranged in a first and second output path of the first polarizing beam splitter, forming a clockwise and counter-clockwise path for the photon beam behind the first polarizing beam splitter, wherein the polarized photon beam of the first light source enters the first polarizing beam splitter on a third or fourth output path, wherein the entangled photon source comprises at least the following optical components:
- the Sagnac loop, and
- a nonlinear crystal to produce down converted photons and a polarization flip element in the Sagnac loop, preferably a half-wave-plate, or a twisted periscope or a Fresnel-Rhomb,
- a second polarized photon beam to generate down conversion photons in the nonlinear crystal,
- a first coupling means and a dichroic mirror in the input path of the pump-beam of the first polarizing beam splitter, preferably on the third output path of the first polarizing beam splitter,
- a second coupling means in the fourth output path of the first polarizing beam splitter,
wherein the Sagnac loop is aligned by a method according to one method above.

In a preferred embodiment of the method an aligned entangled photon source with an aligned Sagnac loop is provided comprising the steps
III) first arrangement of the additionally optical components of the entangled photon source,
and after the Sagnac loop alignment
IV) performing one or more pre-alignment steps of the first and second coupling means by a tip/tilt movement and focus adjustment of the first and second coupling means in order to maximize the collection of the pump-beam and/or down converted photons,
V) performing one or more alignment steps of the first and second coupling means by a tip/tilt movement and focus of the first and second coupling means in order to maximize the coincidence counts of the down converted photon pairs.

In a preferred embodiment of the method, the first and the second polarized photon beams are emitted by one light source, whereas the fist and the second polarized photon beams are the same.

In a preferred embodiment of the method, the first polarized photon beam is emitted by an auxiliary light source and the second polarized photon beam is emitted by a pump laser, whereas the first and the second polarized photon beams overlap spatially in the Sagnac loop.

In a preferred embodiment the first and the second polarized photon beams are emitted by one light source, or the same light source, whereas the first and the second polarized photon beams are the same.

In a preferred embodiment, the method includes a further step between step IV) and step V): performing one or more alignment steps of the first coupling means by a tip/tilt movement and focus of the first coupling means in order to maximize the measured power of an additional alignment beam detected in the first coupling means, wherein the additional alignment beam enters the entangled photon source by the second coupling means, and/or performing one or more alignment steps of the second coupling means by a tip/tilt movement and focus of the second coupling means in order to maximize the measured power of an additional alignment beam detected in the second coupling means, wherein the additional alignment beam enters the entangled photon source by the first coupling means.

In a preferred embodiment a control device is capable to provide an alignment method, wherein the control device is connected
- with the mirrors of the Sagnac loop in order to perform the tip/tilt movement, or a drive mechanism of the mirrors of the Sagnac loop and
- with the observation means, preferably the power-meter and/or the camera and/or an optical component with a surface to monitor the interference, in order to observe the clockwise and counter-clockwise beams in a reflection output path of a second and/or a third polarizing beam splitter,
- preferably with the power-meter in order to measure the optical power, and/or the camera and/or an optical component with a surface to monitor the interference in order to detection and/or maximization of the interference of the clockwise and counter-clockwise beams in a reflection output path of a second and/or a third polarizing beam splitter.

In a preferred embodiment a control device is provided wherein the control device is additional connected with the first and second coupling means in order to perform the tip/tilt movement and/or focus adjustment and a first and second detection means in order to monitor the collected light in the first and second coupling means.

In a preferred embodiment a computer device with a microprocessor with a nonvolatile memory is provided, wherein the nonvolatile memory comprises an executable program in order to provide one of the above-mentioned methods, preferably wherein the computer device is the control device.

In a preferred embodiment an apparatus to provide a method according to one of the above-mentioned methods is provided.

In a preferred embodiment of the apparatus an entangled photon source comprising a Sagnac loop and an apparatus to provide an aligned Sagnac loop is provided, wherein the entangled photon source comprises at least the following optical components:
- the Sagnac loop, and
- a nonlinear crystal to produce down converted photons and a polarization flip element in the Sagnac loop, preferably a half-wave-plate, or a twisted periscope or a Fresnel-Rhomb,
- a second polarized photon beam to generate down conversion photons in the nonlinear crystal,
- a first coupling means and a dichroic mirror in the input path of the pump-beam of the first polarizing element, preferably on the third output path of the first polarizing beam splitter,
- a second coupling means in the fourth output path of the first polarizing beam splitter.

In the following, the invention will be explained by way of preferred embodiments illustrated in the drawings, yet without being restricted thereto. **In** the drawings:
- Fig. 1: is an entangled photon source in Sagnac configuration, the pump and alignment components not shown;
- Fig. 2: is a schematic view of the entangled photon source from Fig. 1 with pump laser and alignment components and pumped in counter-clockwise pump direction;
- Fig. 3: is a schematic view of the entangled photon source from Fig. 1 and 2 with pump laser and alignment components and pumped in clockwise pump direction;
- Fig. 4: is a schematic view of the entangled photon source from Fig. 1 and 2 with pump laser and alignment components and pumped in clockwise and counter-clockwise direction;
- Fig. 5: first embodiment of the alignment components for a Sagnac loop, e.g. from Fig. 1, with polarizing beam splitter, a monitor and the pump laser;
- Fig. 6: second embodiment of the alignment components for a Sagnac loop of Fig. 1 to 4 with polarizing beam splitter, a power-meter and the pump laser;
- Fig. 7: third embodiment of the alignment components for a Sagnac loop, e.g. from Fig. 1, with polarizing beam splitter, a non-reciprocal optical device, a polarizer, a power-meter and the pump laser;
- Fig. 8: fourth embodiment of the alignment components for a Sagnac loop, e.g. from Fig. 1, with polarizing beam splitter, a non-reciprocal optical device, a polarizer, a power-meter and the pump laser and a fiber between the polarizing beam splitters;
- Fig. 9: is an entangled photon source in Sagnac configuration with alignment components from Fig. 6;

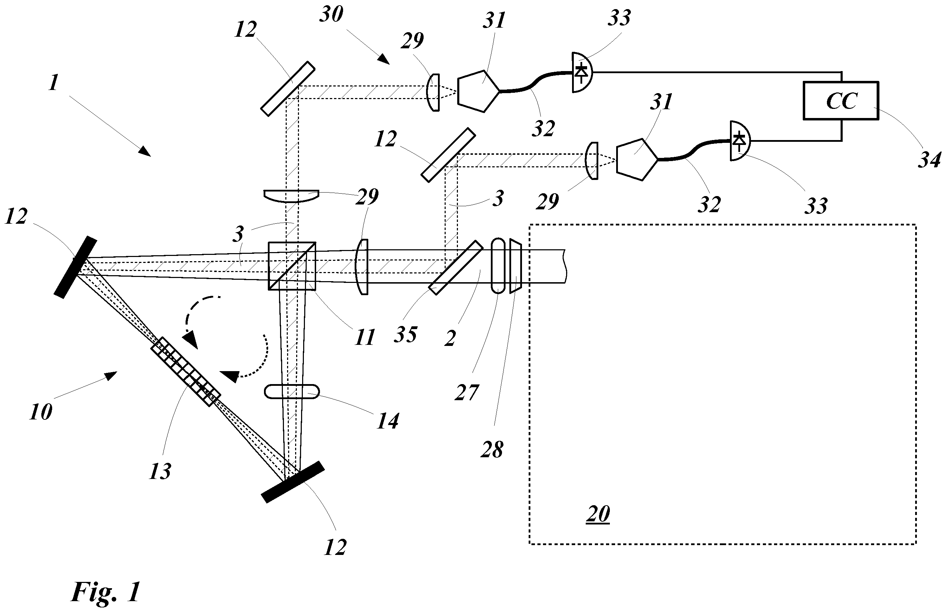

Fig. 1 shows an entangled photon source 1 in Sagnac configuration. The Sagnac loop 10 is formed by a first polarizing beam splitter 11 and two mirrors 12. In the middle of the Sagnac loop 10 a crystal 13 is arranged.

The Sagnac loop 10 is pumped by the polarized photon beam 2 emitted from a laser 21 (not shown in Fig. 1). A lens 29 or a lens system focus the polarized photon beam 2 into the crystal 13 in the Sagnac loop. In this embodiment of Fig. 1 the crystal 13 is a type-II down conversion crystal 13 for example a ppKTP (Potassium titanyl phosphate) crystal oriented so that when pumped by a horizontal polarized photon beam 2 pairs of down conversion photons with orthogonal polarization, e.g. horizontal (H) and vertical (V) polarization are produced. In addition, a dual wavelength half-wave plate 14 is arranged in the Sagnac loop to change the polarization of all incoming photons of the polarized photon beam 2 and the down conversion photon beam 3 linearly by 90°, e.g. from horizontal (H) to vertical (V). This dual wavelength half-wave plate 14 is not always necessary for the alignment of the Sagnac loop but to ensure the entanglement in the entangled photon source.

The first polarizing beam splitter 11 comprises four sides, on each side a corresponding output and input path for the polarized photon beam 2 and the down conversion photon beam 3 is assigned. Input path means that beams enter the first polarizing beam splitter 11 on this side. Output path beams exit the first polarizing beam splitter 11 on this side. This also applies for all the following polarizing beam splitters.

The first polarizing beam splitter 11 splits a photon beam into two, whereas the reflected photon beam is vertically polarized (V) and the transmitted photon beam is horizontally polarized (H). The two mirrors 12 of the Sagnac loop 10 are arranged in a first and second output path of the first polarizing beam splitter 11. The polarized photon beam in Fig. 1 enters the first polarizing beam splitter 11 on a third input path (right side of the first polarizing beam splitter 11). The transmitted photon beam exits the first polarizing beam splitter 11 on the first output path (left side of the first polarizing beam splitter 11) and travels in counter-clockwise direction (counter-clockwise arrow in Fig. 1) and is guided by the mirrors 12 into the second input path (bottom side of the first polarizing beam splitter 11) of the first polarizing beam splitter 11. The reflected photon beam exits the first polarizing beam splitter 11 on the second output path (bottom side of the first polarizing beam splitter 11) and travels in clockwise direction (clockwise arrow in Fig. 1) and is guided by the mirrors 12 into the first input path (left side of the first polarizing beam splitter 11) of the first polarizing beam splitter 11. For an aligned Sagnac loop the first and second input and output paths (meaning the clockwise and counter-clockwise directions) of the polarized photon beams overlap spatially.

The down conversion photon pairs are split by the first polarizing beam splitter 11, are guided by mirrors 12, a dichroic mirror 35 and focused by a lens or lens system 29 and a coupling means 31 into single mode fibers 32, which are connected to photon-detectors 33. The signal of the photon-detectors 33 is counted in a coincidence logic 34 to register single photon events and coincidence events detected on the photon-detectors 33.

To adjust the pump direction of the polarized photon beam 2 a half-wave-plate 27 and a quarter-wave-plate 28 are arranged in the polarized photon beam 2 before the first polarizing beam splitter 11.

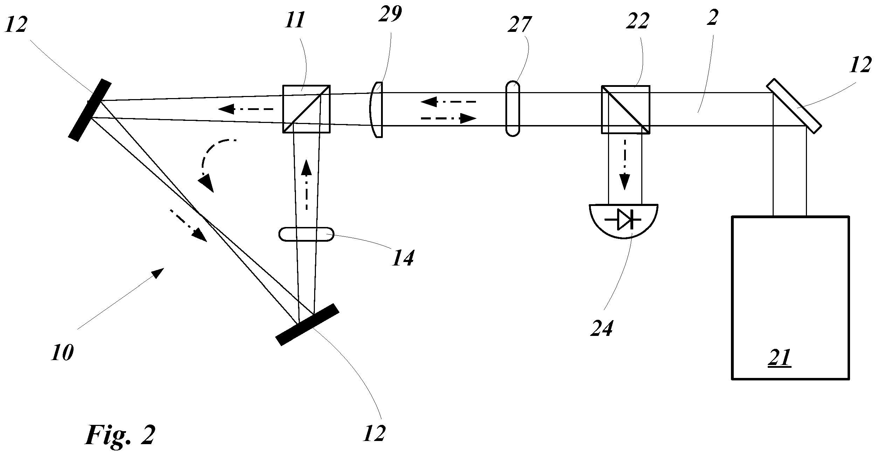

Fig. 2 shows the Sagnac loop 10 with counter-clockwise pump direction and a first embodiment of the alignment components comprising a second polarizing beam splitter 22, a first light source 21 and a power-meter 24. The first light source 21 emits the polarized photon beam 2. The polarized photon beam 2 transmitted in the second polarizing beam splitter 22 is horizontal polarized. The horizontal polarization is not changed by the half-wave-plate 27 at 0° leading to a counter-clockwise pump direction in the Sagnac loop. The polarized photon beam 2 in the Sagnac loop is rotated to a vertical polarization by the dual wavelength half-wave-plate 14 so that the polarized photon beam 2 is reflected in the first polarizing beam splitter 11, not rotated on the way towards the second polarizing beam splitter 22 by the half-wave-plate 27 leading to a reflection of the polarized photon beam 2 on the second polarizing beam splitter 22. The polarized photon beam 2 is detected by a power-meter 24 on the reflection output of the second polarizing beam splitter 22.

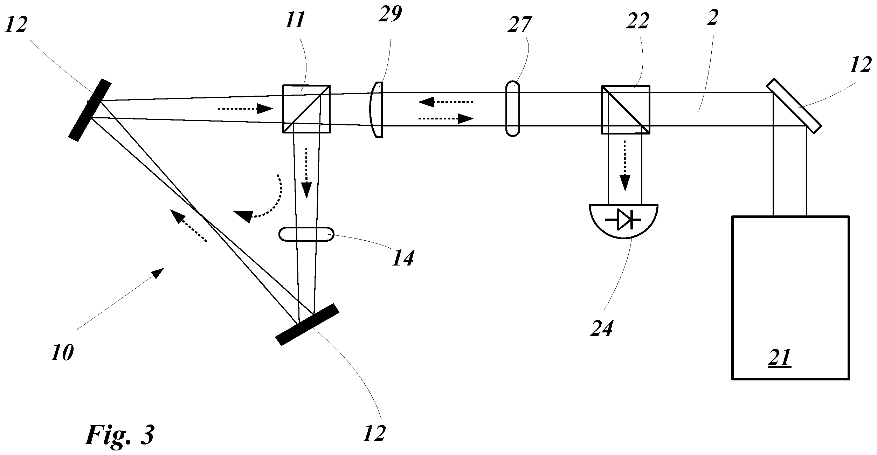

Fig. 3 shows the Sagnac loop 10 with clockwise pump direction and the first embodiment of the alignment components corresponding of Fig. 2. The first light source 21 emits the polarized photon beam 2. The polarized photon beam 2 transmitted in the second polarizing beam splitter 22 is horizontal polarized. The horizontal polarization can be changed to a linear vertical polarization by the half-wave-plate 27 at 45° leading to a clockwise pump direction in the Sagnac loop. The polarized photon beam 2 in the Sagnac loop is rotated to a horizontal polarization by the dual wavelength half-wave-plate 14 so that the polarized photon beam 2 is transmitted in the first polarizing beam splitter 11, rotated again to a vertical polarization on the way towards the second polarizing beam splitter 22 by the half-wave-plate 27 leading to a reflection of the polarized photon beam 2 on the second polarizing beam splitter 22. The polarized photon beam 2 is detected by a power-meter 24 on the reflection output of the second polarizing beam splitter 22.

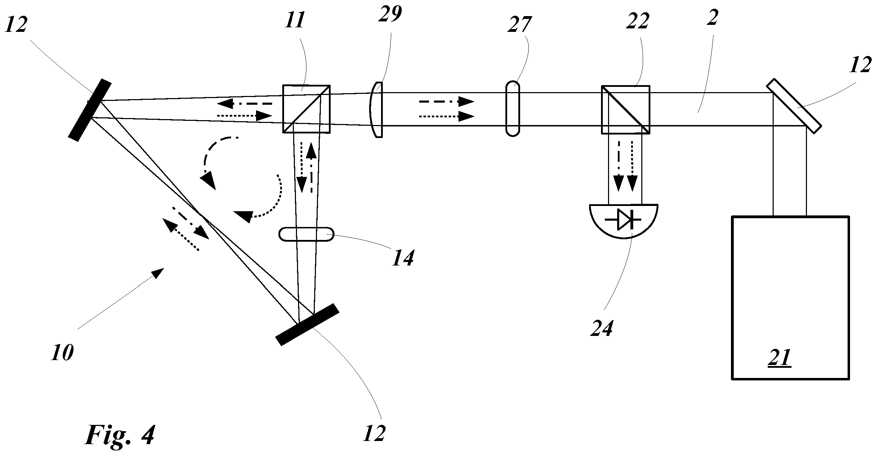

Fig. 4 shows the Sagnac loop 10 and the first embodiment of the alignment components corresponding to Fig. 2 for both, the clockwise and counter-clockwise pump direction. In this embodiment the half-wave-plate 27 is arranged at 22,5° to rotate the horizontal polarized photon beam 2 transmitted by the second polarizing beam splitter 22 to a 45° linear polarization. The Sagnac loop 10 is then pumped in both directions and the polarized photon beams 2 from both directions can be detected on the power-meter 24. The spatial overlap of the polarized photon beams 2 in the Sagnac loop 10 can be aligned by the measurement of the power of the polarized photon beams 2 on the power-meter 24.

The spatial overlap of the clockwise and counter-clockwise polarized photon beams 2 can be aligned by so called tip-tilt (or two axes tilt) movement of the two mirrors 12 in the Sagnac loop 10. Tip-tilt means a movement of the mirror around two axes where each movement around one axis can be performed independently. By a tip-tilt movement of the two mirrors 12 the polarized photon beams 2 in the Sagnac loop can be brought to a spatial overlap. This can be monitored by the increase of the power on the power-meter 24.

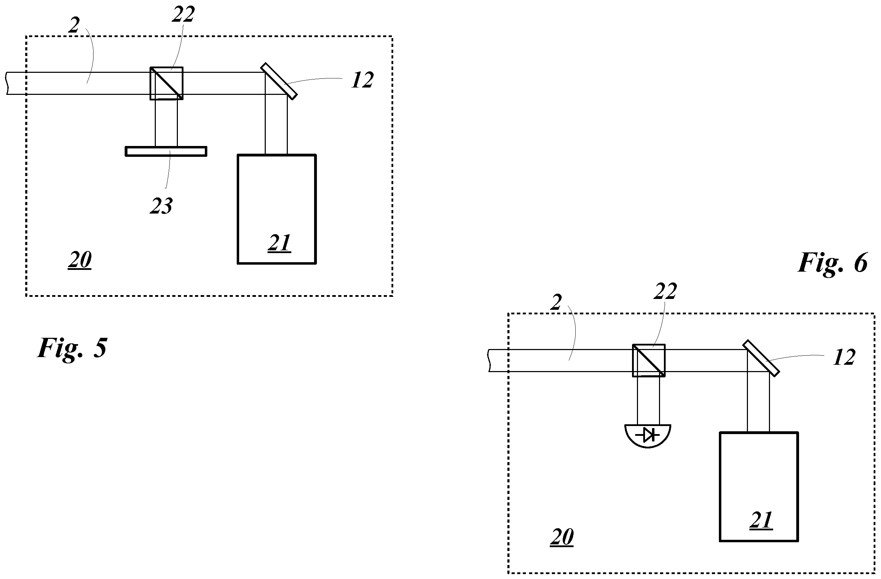

Fig. 5 shows a second embodiment of the alignment components comprising a second polarizing beam splitter 22, a first light source 21 and a monitor 23. The monitor 23 can be a camera or any other optical component with a surface to monitor the polarized photon beam 2. On the monitor 23 the spatial overlap of the polarized photon beams 2 in the Sagnac loop 10 can be detected by the overlap or the interference pattern of the two the polarized photon beams 2 (clockwise and counter-clockwise) on the monitor 23.

Fig. 6 shows the first embodiment of the alignment components from Fig. 2 to 4.

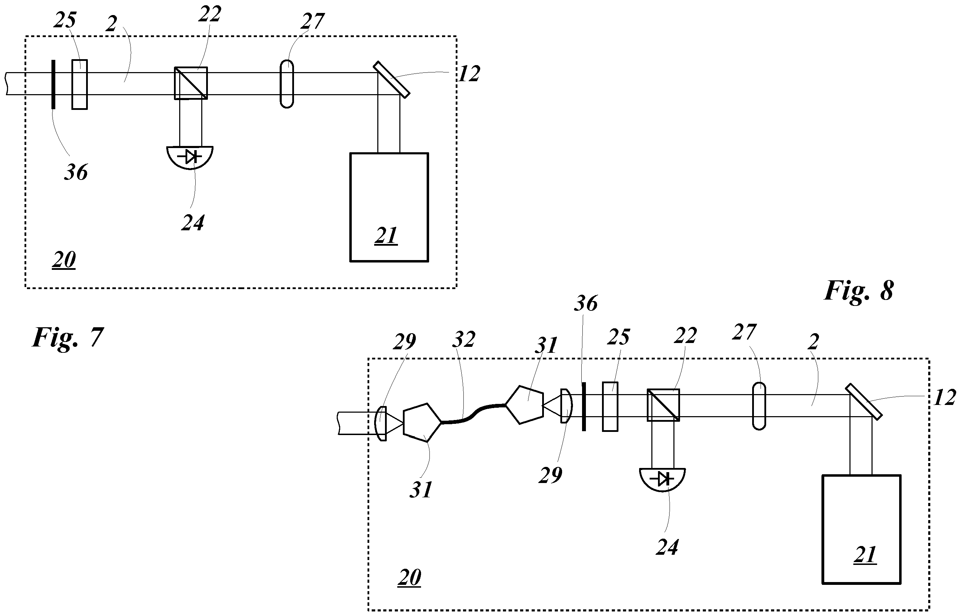

Fig. 7 shows a third embodiment of the alignment components comprising a second polarizing beam splitter 22, a first light source 21 and a power-meter 24, a non-reciprocal optical device 25 and a polarizer 36. On the power-meter 24 the spatial overlap of the polarized photon beams 2 in the Sagnac loop 10 can be detected by a maximization of the optical power of the polarized photon beams 2 on the power-meter 24.

Fig. 8 shows a fourth embodiment of the alignment components. These differ from the components in Fig. 7 only in additional coupling means 31, lenses 29 and a fiber 32 to connect the Sagnac loop 10 (not shown in Fig. 8) and the pump and alignment components section 20.

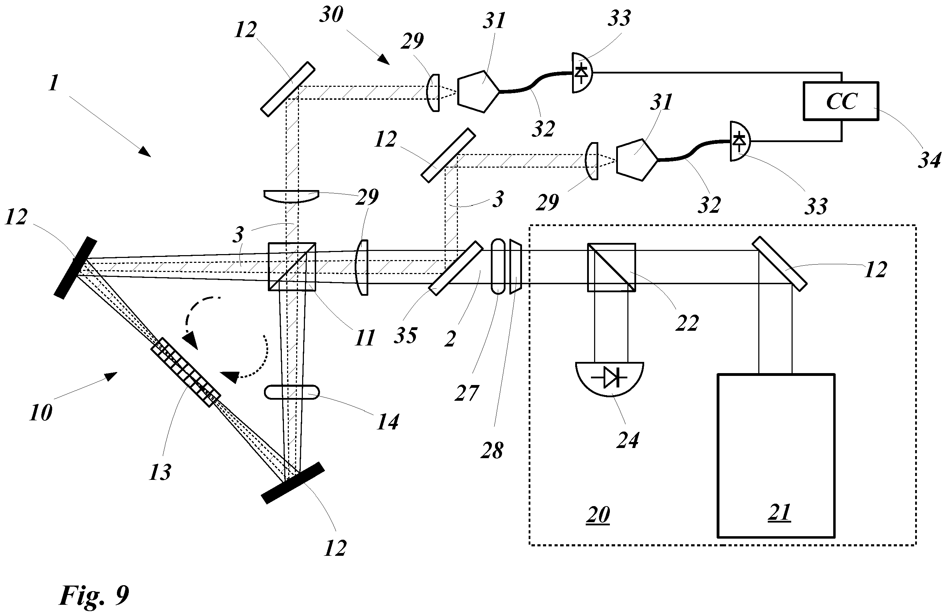

Fig. 9 shows an entangled photon source 1 from Fig. 1 with the first embodiment of the alignment components of Fig. 2 to 4 and Fig. 6.

### Reference signs

- 1: entangled photon source
- 2: polarized photon beam
- 3: down conversion photon beam
- 10: Sagnac loop
- 11: first polarizing beam splitter
- 12: mirror
- 13: crystal
- 14: dual wavelength half-wave plate
- 20: pump and alignment components section
- 21: first light source
- 22: second polarizing beam splitter
- 23: monitor
- 24: power-meter
- 25: non-reciprocal optical device
- 26: polarizer
- 27: half-wave plate
- 28: quarter-wave plate
- 29: lens
- 30: coupling section
- 31: coupling means
- 32: fiber
- 33: photon-detector
- 34: coincidence logic
- 35: dichroic mirror
- 36: polarizer

## Claims

1. A method to align a Sagnac loop (10) for an entangled photon source (1) comprising the steps of providing:
I) first arrangement of optical components in a Sagnac loop (10) configuration, wherein the optical components comprise of
- a first light source (21) emitting a polarized photon beam (2), and
- the Sagnac loop (10), formed by a first polarizing beam splitter (11), and two mirrors (12) arranged in a first and second output path of the first polarizing beam splitter (11), forming a clockwise and counter-clockwise path for the photon beam (2) behind the first polarizing beam splitter (11), wherein the polarized photon beam (2) of the first light source (21) enters the first polarizing beam splitter (11) on a third or fourth output path,
II) one or more optimization steps performed by a tip/tilt movement of the two mirrors (12) and an observation of the clockwise and counter-clockwise beams in an output path of a second and/or third polarizing beam splitter (22), in order to optimize the spatial overlap of the clockwise and counter-clockwise photon beams (2) in the Sagnac loop (10),
**characterized in that**
the second and/or third polarizing beam splitter (22) is arranged in the third and/or fourth output path of the first polarizing beam splitter (11), and
the observation in the output path of the second and/or third polarizing beam splitter (22) is performed by
- a measurement of the optical power of the clockwise and counter-clockwise photon beams (2) with a power-meter (24), and/or
- a detection of the interference pattern of the clockwise and counter-clockwise photon beams (2) with a camera (23) or an optical component with a surface to monitor the interference.

2. The method according to claim 1,
wherein the tip/tilt movement of the two mirrors (12) and a minimization or maximization of the measured optical power in the reflection output of the second and/or third polarizing beam splitter (22) arranged at the third or fourth side of the first polarizing beam splitter (11) is performed in order to optimize the spatial overlap of the clockwise and counter-clockwise propagation beams in the Sagnac loop (10).

3. The method according to claim 1,
wherein the tip/tilt movement of the mirrors (12) and a detection and/or minimization of the interference in the reflection output of the second and/or third polarizing beam splitter (22) arranged at the third or fourth side of the first polarizing beam splitter (11) is performed in order to optimize the spatial overlap of the clockwise and counter-clockwise propagation beams in the Sagnac loop (10).

4. The method according to claim 1,
wherein the tip/tilt movement of the mirrors (12) and a maximization of the measured optical power in the reflection output of the third polarizing beam splitter (22) arranged at same side as the light source (21) is performed in order to optimize the spatial overlap of the clockwise and counter-clockwise propagating beams in the Sagnac loop (10),
wherein the third beam splitter (22) is arranged between the light source (21) and the first polarizing beam splitter (11), and wherein in addition between the third polarizing beam splitter (22) and the first polarizing beam splitter (11) a non-reciprocal optical device (25), preferably a Faraday-rotator, and a polarizer at 45° is arranged.

5. The method according to claim 1,
wherein the spatial overlap is optimized by one method of the claims 2, or 3, or 4, or two methods of the claims 2, or 3, or 4, or three methods of the claims 2, or 3, or 4.

6. A method to provide an entangled photon source (1) with an aligned Sagnac loop (10),
wherein the Sagnac loop (10) comprises
- a first polarized photon beam (2) to align the Sagnac loop (10), and
- the Sagnac loop (10), formed by a first polarizing beam splitter (11), and two mirrors arranged (12) in a first and second output path of the first polarizing beam splitter (11), forming a clockwise and counter-clockwise path for the photon beam (2) behind the first polarizing beam splitter (11), wherein the polarized photon beam (2) of the first light source (21) enters the first polarizing beam splitter (11) on a third or fourth output path,
wherein the entangled photon source (1) comprises at least the following optical components
- the Sagnac loop (10), and
- a nonlinear crystal (13) to produce down converted photons and a polarization flip element (14) in the Sagnac loop (10),
- a second polarized photon beam to generate down conversion photons in the nonlinear crystal (13),
- a first coupling means (31) and a dichroic mirror (35) in the input path of the pump-beam (2) of the first polarizing beam splitter (11),
- a second coupling means (31) in the fourth output path of the first polarizing beam splitter (11),
wherein the Sagnac loop (10) is aligned by a method according to one of the claims 1 to 5.

7. The method according to claim 6,
providing an aligned entangled photon source (1) with an aligned Sagnac loop (10) comprising the steps
III) first arrangement of the additionally optical components of the entangled photon source (1),
and after the Sagnac loop (10) alignment
IV) performing one or more pre-alignment steps of the first and second coupling means (31) by a tip/tilt movement and focus adjustment of the first and second coupling means (31) in order to maximize the collection of the pump-beam and/or down converted photons,
V) performing one or more alignment steps of the first and second coupling means (31) by a tip/tilt movement and focus of the first and second coupling means (31) in order to maximize the coincidence counts of the down converted photon pairs.

8. The method according to one of the claims 6 or 7,
wherein the first polarized photon beam is emitted by an auxiliary light source and the second polarized photon beam is emitted by a pump laser, whereas the first and the second polarized photon beams overlap spatially in the Sagnac loop.

9. The method according to one of the claims 7 or 8, if claim 8 depends on claim 7,
wherein the method includes a further step between step IV) and step V): performing one or more alignment steps of the first coupling means (31) by a tip/tilt movement and focus of the first coupling means (31) in order to maximize the measured power of an additional alignment beam detected in the first coupling means (31), wherein the additional alignment beam enters the entangled photon source (1) by the second coupling means (31), and/or performing one or more alignment steps of the second coupling means (31) by a tip/tilt movement and focus of the second coupling means (31) in order to maximize the measured power of an additional alignment beam detected in the second coupling means (31), wherein the additional alignment beam enters the entangled photon source (1) by the first coupling means (31).

10. Sagnac loop (10) with an apparatus to provide an aligned Sagnac loop (10) for an entangled photon source (1),
wherein the Sagnac loop (10), formed by a first polarizing beam splitter (11), and two mirrors (12) arranged in a first and second output path of the first polarizing beam splitter (11), forming a clockwise and counter-clockwise path for the photon beam (2) behind the first polarizing beam splitter (11),
wherein the apparatus comprises
- a first light source (21) emitting a polarized photon beam (2),
**characterized in that**
the apparatus comprises in addition a second polarizing beam splitter (22), wherein the second polarizing beam splitter (22) is arranged in the third or fourth output path of the first polarizing beam splitter (11),
whereas on a reflecting output path of the second polarizing beam splitter (22)
a) a camera (23) to measure the interference, or
b) an optical component with a surface to monitor the interference, or
c) a power meter (24) to measure the power,
is arranged.

11. Entangled photon source (1) comprising a Sagnac loop (10) with an apparatus to provide an aligned Sagnac loop (10) for an entangled photon source according to claim 10,
wherein the entangled photon source (1) further comprises at least the following optical components
- a nonlinear crystal (13) to produce down converted photons and a polarization flip element (14) in the Sagnac loop (10),
- a second polarized photon beam to generate down conversion photons in the nonlinear crystal (13),
- a first coupling means (31) and a dichroic mirror (35) in the input path of the pump-beam of the first polarizing beam splitter (11),
- a second coupling means (31) in the fourth output path of the first polarizing beam splitter (11).

## Patentansprüche

1. Verfahren zum Justieren eines Sagnac-Loops (10) für eine verschränkte Photonenquelle (1), umfassend die folgenden bereitstellenden Schritte:
I) eine erste Anordnung von optischen Komponenten in einer Sagnac-Loop-Konfiguration (10), wobei die optischen Komponenten Folgendes umfassen:
- eine erste Lichtquelle (21), die einen polarisierten Photonenstrahl (2) emittiert, und
- den Sagnac-Loop (10), gebildet durch einen ersten polarisierenden Strahlteiler (11), und zwei Spiegel (12), die in einem ersten und zweiten Ausgabepfad des ersten polarisierenden Strahlteilers (11) angeordnet sind, und einen Pfad im Uhrzeigersinn und Gegenuhrzeigersinn für den Photonenstrahl (2) hinter dem ersten polarisierenden Strahlteiler (11) bilden, wobei der polarisierte Photonenstrahl (2) der ersten Lichtquelle (21) auf einem dritten oder vierten Ausgabepfad in den ersten polarisierenden Strahlteiler (11) eintritt,
II) einen oder mehrere Optimierungsschritte, die durch eine Kipp-Neige-Bewegung der zwei Spiegel (12) und eine Observation der Strahlen im Uhrzeigersinn und Gegenuhrzeigersinn in einem Ausgabepfad eines zweiten und/oder dritten polarisierenden Strahlteilers (22) durchgeführt werden, um die räumliche Überlappung der Photonenstrahlen (2) im Uhrzeigersinn und Gegenuhrzeigersinn in dem Sagnac-Loop (10) zu optimieren,
**dadurch gekennzeichnet,**
**dass** der zweite und/oder dritte polarisierende Strahlteiler (22) im dritten und/oder vierten Ausgabepfad des ersten polarisierenden Strahlteilers (11) angeordnet ist, und
**dass** die Observation im Ausgabepfad des zweiten und/oder dritten polarisierenden Strahlteilers (22) erfolgt durch
- eine Messung der optischen Leistung des Photonenstrahls (2) im Uhrzeigersinn und Gegenuhrzeigersinn mit einem Leistungsmesser (24), und/oder
- eine Detektion des Interferenzmusters der Photonenstrahlen (2) im Uhrzeigersinn und Gegenuhrzeigersinn mit einer Kamera (23) oder einer optischen Komponente mit einer Fläche zur Überwachung der Interferenz.

2. Verfahren nach Anspruch 1,
wobei die Kipp-Neige-Bewegung der zwei Spiegel (12) und eine Minimierung oder Maximierung der gemessenen optischen Leistung in der Reflexionsausgabe des zweiten und/oder dritten polarisierenden Strahlteilers (22), der an der dritten oder vierten Seite des ersten polarisierenden Strahlteilers (11) angeordnet ist, durchgeführt wird, um die räumliche Überlappung der sich im Uhrzeigersinn und Gegenuhrzeigersinn ausbreitenden Strahlen in dem Sagnac-Loop (10) zu optimieren.

3. Verfahren nach Anspruch 1,
wobei die Kipp-Neige-Bewegung der Spiegel (12) und eine Detektion und/oder Minimierung der Interferenz in der Reflexionsausgabe des zweiten und/oder dritten polarisierenden Strahlteilers (22), der an der dritten oder vierten Seite des ersten polarisierenden Strahlteilers (11) angeordnet ist, durchgeführt wird, um die räumliche Überlappung der sich im Uhrzeigersinn und Gegenuhrzeigersinn ausbreitenden Strahlen in dem Sagnac-Loop (10) zu optimieren.

4. Verfahren nach Anspruch 1,
wobei die Kipp-Neige-Bewegung der Spiegel (12) und eine Maximierung der gemessenen optischen Leistung in der Reflexionsausgabe des dritten polarisierenden Strahlteilers (22), der auf derselben Seite wie die Lichtquelle (21) angeordnet ist, durchgeführt wird, um die räumliche Überlappung der sich im Uhrzeigersinn und Gegenuhrzeigersinn ausbreitenden Strahlen in dem Sagnac-Loop (10) zu optimieren,
wobei der dritte Strahlteiler (22) zwischen der Lichtquelle (21) und dem ersten polarisierenden Strahlteiler (11) angeordnet ist, und wobei zusätzlich zwischen dem dritten polarisierenden Strahlteiler (22) und dem ersten polarisierenden Strahlteiler (11) eine nicht-reziproke optische Vorrichtung (25), vorzugsweise ein Faraday-Rotator, und ein Polarisator bei 45° angeordnet ist.

5. Verfahren nach Anspruch 1,
wobei die räumliche Überlappung durch ein Verfahren nach den Ansprüchen 2, 3 oder 4 oder zwei Verfahren nach den Ansprüchen 2, 3 oder 4 oder drei Verfahren nach den Ansprüchen 2, 3 oder 4 optimiert wird.

6. Verfahren zum Bereitstellen einer verschränkten Photonenquelle (1) mit einem justierten Sagnac-Loop (10),
wobei der Sagnac-Loop (10) Folgendes umfasst:
- einen ersten polarisierten Photonenstrahl (2), um den Sagnac-Loop (10) auszurichten, und
- den Sagnac-Loop (10), gebildet durch einen ersten polarisierenden Strahlteiler (11), und zwei Spiegel (12), die in einem ersten und zweiten Ausgabepfad des ersten polarisierenden Strahlteilers (11) angeordnet sind und einen Pfad im Uhrzeigersinn und Gegenuhrzeigersinn für den Photonenstrahl (2) hinter dem ersten polarisierenden Strahlteiler (11) bilden, wobei der polarisierte Photonenstrahl (2) der ersten Lichtquelle (21) auf einem dritten oder vierten Ausgabepfad in den ersten polarisierenden Strahlteiler (11) eintritt,
wobei die verschränkte Photonenquelle (1) mindestens die folgenden optischen Komponenten umfasst:
- den Sagnac-Loop (10), und
- einen nichtlinearen Kristall (13) zur Erzeugung abwärts konvertierter Photonen und ein Polarisationsumschaltelement (14) in dem Sagnac-Loop (10),
- einen zweiten polarisierten Photonenstrahl zur Erzeugung abwärts konvertierter Photonen in dem nichtlinearen Kristall (13),
- ein erstes Kopplungsmittel (31) und einen dichroitischen Spiegel (35) im Eingabepfad des Pumpstrahls (2) des ersten polarisierenden Strahlteilers (11),
- ein zweites Kopplungsmittel (31) im vierten Ausgabepfad des ersten polarisierenden Strahlteilers (11),
wobei der Sagnac-Loop (10) nach einem Verfahren nach einem der Ansprüche 1 bis 5 justiert wird.

7. Verfahren nach Anspruch 6,
bereitstellend eine justierte verschränkte Photonenquelle (1) mit einem justierten Sagnac-Loop (10), umfassend die folgenden Schritte:
III) erste Anordnung der zusätzlichen optischen Komponenten der verschränkten Photonenquelle (1),
und nach der Justierung des Sagnac-Loops (10)
IV) Durchführen eines oder mehrerer Schritte zur Vorjustierung der ersten und zweiten Kopplungsmittel (31) durch eine Kipp-Neige-Bewegung und Fokuseinstellung der ersten und zweiten Kopplungsmittel (31), um die Sammlung des Pumpstrahls und/oder der abwärts konvertierten Photonen zu maximieren,
V) Ausführen eines oder mehrerer Justierungsschritte des ersten und des zweiten Kopplungsmittels (31) durch eine Kipp-Neige-Bewegung und Fokussierung des ersten und des zweiten Kopplungsmittels (31), um die Koinzidenzzahlen der abwärts konvertierten Photonenpaare zu maximieren.

8. Verfahren nach einem der Ansprüche 6 oder 7,
wobei der erste polarisierte Photonenstrahl von einer zusätzlichen Lichtquelle emittiert wird und der zweite polarisierte Photonenstrahl von einem Pumplaser emittiert wird, wohingegen sich der erste und der zweite polarisierte Photonenstrahl in dem Sagnac-Loop räumlich überlappen.

9. Verfahren nach einem der Ansprüche 7 oder 8, wenn Anspruch 8 auf Anspruch 7 rückbezogen ist,
wobei das Verfahren zwischen Schritt IV) und Schritt V) einen weiteren Schritt umfasst:
Durchführen eines oder mehrerer Justierungsschritte des ersten Kopplungsmittels (31) durch eine Kipp-Neige-Bewegung und Fokussierung des ersten Kopplungsmittels (31), um die gemessene Leistung eines zusätzlichen Justierungsstrahls, der in dem ersten Kopplungsmittel (31) detektiert wird, zu maximieren, wobei der zusätzliche Justierungsstrahl durch das zweite Kopplungsmittel (31) in die verschränkte Photonenquelle (1) eintritt, und/oder
Durchführen eines oder mehrerer Justierungsschritte des zweiten Kopplungsmittels (31) durch eine Kipp-Neige-Bewegung und Fokussierung des zweiten Kopplungsmittels (31), um die gemessene Leistung eines zusätzlichen Justierungsstrahls, der in dem zweiten Kopplungsmittel (31) detektiert wird, zu maximieren, wobei der zusätzliche Justierungsstrahl durch das erste Kopplungsmittel (31) in die verschränkte Photonenquelle (1) eintritt.

10. Sagnac-Loop (10) mit einer Vorrichtung zur Bereitstellung eines justierten Sagnac-Loops (10) für eine verschränkte Photonenquelle (1),
wobei der Sagnac-Loop (10), gebildet durch einen ersten polarisierenden Strahlteiler (11), und zwei Spiegel (12), die in einem ersten und zweiten Ausgabepfad des ersten polarisierenden Strahlteilers (11) angeordnet sind, und einen Pfad im Uhrzeigersinn und Gegenuhrzeigersinn für den Photonenstrahl (2) hinter dem ersten polarisierenden Strahlteiler (11) bilden, wobei die Vorrichtung umfasst:
- eine erste Lichtquelle (21), die einen polarisierten Photonenstrahl (2) emittiert,
**dadurch gekennzeichnet,**
**dass** die Vorrichtung zusätzlich einen zweiten polarisierenden Strahlteiler (22) umfasst, wobei der zweite polarisierende Strahlenteiler (22) im dritten oder vierten Ausgabepfad des ersten polarisierenden Strahlteilers (11) angeordnet ist,
wohingegen in einem reflektierenden Ausgabepfad des zweiten polarisierenden Strahlteilers (22)
a) eine Kamera (23) zur Messung der Interferenz, oder
b) eine optische Komponente mit einer Fläche zur Überwachung der Interferenz, oder
c) ein Leistungsmessgerät (24) zur Messung der Leistung,
angeordnet ist.

11. Verschränkte Photonenquelle (1) umfassend einen Sagnac-Loop (10) mit einer Vorrichtung zur Bereitstellung eines justierten Sagnac-Loops (10) für eine verschränkte Photonenquelle nach Anspruch 10,
wobei die verschränkte Photonenquelle (1) außerdem mindestens die folgenden optischen Komponenten umfasst:
- einen nichtlinearen Kristall (13) zur Erzeugung abwärts konvertierter Photonen und ein Polarisationsumschaltelement (14) in dem Sagnac-Loop (10),
- einen zweiten polarisierten Photonenstrahl zur Erzeugung abwärts konvertierter Photonen in dem nichtlinearen Kristall (13),
- ein erstes Kopplungsmittel (31) und einen dichroitischen Spiegel (35) im Eingabepfad des Pumpstrahls des ersten polarisierenden Strahlteilers (11),
- ein zweites Kopplungsmittel (31) im vierten Ausgabepfad des ersten polarisierenden Strahlteilers (11).

## Revendications

1. Méthode d'alignement d'une boucle de Sagnac (10) pour une source de photons intriqués (1) comprenant les étapes de fournir :
I) un premier arrangement de composants optiques dans une configuration de boucle de Sagnac (10), dans laquelle les composants optiques comprennent
- une première source lumineuse (21) émettant un faisceau de photons polarisés (2), et
- la boucle de Sagnac (10), formée par un premier séparateur de faisceau polarisant (11), et deux miroirs (12) disposés dans un premier et un deuxième chemin de sortie du premier séparateur de faisceau polarisant (11), formant un chemin dans le sens des aiguilles d'une montre et dans le sens inverse des aiguilles d'une montre pour le faisceau de photons (2) derrière le premier séparateur de faisceau polarisant (11), dans laquelle le faisceau de photons polarisés (2) de la première source lumineuse (21) pénètre dans le premier séparateur de faisceau polarisant (11) sur un troisième ou un quatrième chemin de sortie,
II) une ou plusieurs étapes d'optimisation réalisées par un mouvement de bascule-inclinaison des deux miroirs (12) et une observation des faisceaux dans le sens des aiguilles d'une montre et dans le sens inverse des aiguilles d'une montre dans un chemin de sortie d'un deuxième et/ou d'un troisième séparateur de faisceau polarisant (22), afin d'optimiser le chevauchement spatial des faisceaux de photons dans le sens des aiguilles d'une montre et dans le sens inverse des aiguilles d'une montre (2) dans la boucle de Sagnac (10),
**caractérisé en ce que**
le deuxième et/ou troisième séparateur de faisceau polarisant (22) est disposé sur le troisième et/ou quatrième chemin de sortie du premier séparateur de faisceau polarisant (11), et
l'observation sur le chemin de sortie du deuxième et/ou du troisième séparateur de faisceau polarisant (22) est réalisée par
- une mesure de la puissance optique des faisceaux de photons (2) dans le sens des aiguilles d'une montre et dans le sens inverse des aiguilles d'une montre à l'aide d'un wattmètre (24), et/ou
- une détection du motif d'interférence des faisceaux de photons dans le sens des aiguilles d'une montre et dans le sens inverse des aiguilles d'une montre (2) à l'aide d'une caméra (23) ou d'un composant optique doté d'une surface permettant de surveiller l'interférence.

2. La méthode selon la revendication 1,
dans laquelle le mouvement de bascule-inclinaison des deux miroirs (12) et la minimisation ou la maximisation de la puissance optique mesurée dans la sortie de réflexion du deuxième et/ou du troisième séparateur de faisceau polarisant (22) disposé sur le troisième ou le quatrième côté du premier séparateur de faisceau polarisant (11) sont effectués afin d'optimiser le chevauchement spatial des faisceaux de propagation dans le sens des aiguilles d'une montre et dans le sens inverse des aiguilles d'une montre dans la boucle de Sagnac (10).

3. La méthode selon la revendication 1,
le mouvement de bascule-inclinaison des miroirs (12) et la détection et/ou la minimisation de l'interférence dans la sortie de réflexion du deuxième et/ou du troisième séparateur de faisceau polarisant (22) disposé sur le troisième ou le quatrième côté du premier séparateur de faisceau polarisant (11) sont effectués afin d'optimiser le chevauchement spatial des faisceaux de propagation dans le sens des aiguilles d'une montre et dans le sens inverse des aiguilles d'une montre dans la boucle de Sagnac (10).

4. La méthode selon la revendication 1,
le mouvement de bascule-inclinaison des miroirs (12) et la maximisation de la puissance optique mesurée dans la sortie de réflexion du troisième séparateur de faisceau polarisant (22) disposé du même côté que la source lumineuse (21) sont effectués afin d'optimiser le chevauchement spatial des faisceaux de propagation dans le sens des aiguilles d'une montre et dans le sens inverse dans la boucle de Sagnac (10),
dans laquelle le troisième séparateur de faisceau (22) est disposé entre la source lumineuse (21) et le premier séparateur de faisceau polarisant (11), et dans laquelle un dispositif optique non réciproque (25), de préférence un rotateur de Faraday, et un polariseur à 45° sont disposés entre le troisième séparateur de faisceau polarisant (22) et le premier séparateur de faisceau polarisant (11).

5. La méthode selon la revendication 1,
dans laquelle le chevauchement spatial est optimisé par une méthode des revendications 2, 3 ou 4, ou deux méthodes des revendications 2, 3 ou 4, ou trois méthodes des revendications 2, 3 ou 4.

6. Méthode pour fournir une source de photons intriqués (1) avec une boucle de Sagnac alignée (10),
dans laquelle la boucle de Sagnac (10) comprend
- un premier faisceau de photons polarisés (2) pour aligner la boucle de Sagnac (10), et
- la boucle de Sagnac (10), formée par un premier séparateur de faisceau polarisant (11), et deux miroirs disposés (12) dans un premier et un deuxième chemin de sortie du premier séparateur de faisceau polarisant (11), formant un chemin dans le sens des aiguilles d'une montre et dans le sens inverse des aiguilles d'une montre pour le faisceau de photons (2) derrière le premier séparateur de faisceau polarisant (11), dans laquelle le faisceau de photons polarisés (2) de la première source lumineuse (21) pénètre dans le premier séparateur de faisceau polarisant (11) sur un troisième ou un quatrième chemin de sortie,
dans laquelle la source de photons intriqués (1) comprend au moins les composants optiques suivants :
- la boucle de Sagnac (10), et
- un cristal non linéaire (13) pour produire des photons convertis vers le bas et un élément de changement de la polarisation (14) dans la boucle de Sagnac (10),
- un deuxième faisceau de photons polarisés pour générer des photons convertis vers le bas dans le cristal non linéaire (13),
- un premier moyen de couplage (31) et un miroir dichroïque (35) sur le chemin d'entrée du faisceau de pompe (2) du premier séparateur de faisceau polarisant (11),
- un deuxième moyen de couplage (31) dans le quatrième chemin de sortie du premier séparateur de faisceau polarisant (11),
dans laquelle la boucle de Sagnac (10) est alignée par une méthode selon l'une des revendications 1 à 5.

7. La méthode selon la revendication 6,
fournir une source de photons intriqués alignés (1) avec une boucle de Sagnac alignée (10) comprenant les étapes suivantes :
III) première disposition des composants optiques supplémentaires de la source de photons intriqués (1),
et après l'alignement de la boucle de Sagnac (10) :
IV) effectuer une ou plusieurs étapes de pré-alignement des premier et deuxième moyens de couplage (31) par un mouvement de bascule-inclinaison et de focalisation des premier et deuxième moyens de couplage (31) afin de maximiser la collecte du faisceau de pompage et/ou des photons convertis vers le bas,
V) effectuer une ou plusieurs étapes d'alignement du premier et du deuxième moyen de couplage (31) par un mouvement de bascule-inclinaison et de focalisation du premier et du deuxième moyen de couplage (31) afin de maximiser le nombre de coïncidences des paires de photons convertis vers le bas.

8. La méthode selon l'une des revendications 6 ou 7,
dans laquelle le premier faisceau de photons polarisés est émis par une source lumineuse auxiliaire et le deuxième faisceau de photons polarisés est émis par un laser de pompe, tandis que le premier et le deuxième faisceau de photons polarisés se chevauchent dans l'espace dans la boucle de Sagnac.

9. La méthode selon l'une des revendications 7 ou 8, si la revendication 8 dépend de la revendication 7,
la méthode comprend une étape supplémentaire entre l'étape IV) et l'étape V) :
effectuer une ou plusieurs étapes d'alignement du premier moyen de couplage (31) par un mouvement de bascule-inclinaison et de focalisation du premier moyen de couplage (31) afin de maximiser la puissance mesurée d'un faisceau d'alignement supplémentaire détecté dans le premier moyen de couplage (31), le faisceau d'alignement supplémentaire pénétrant dans la source de photons intriqués (1) par le deuxième moyen de couplage (31), et/ou
effectuer une ou plusieurs étapes d'alignement du deuxième moyen de couplage (31) par un mouvement de bascule-inclinaison et de focalisation du deuxième moyen de couplage (31) afin de maximiser la puissance mesurée d'un faisceau d'alignement supplémentaire détecté dans le deuxième moyen de couplage (31), le faisceau d'alignement supplémentaire pénétrant dans la source de photons intriqués (1) par le premier moyen de couplage (31).

10. Boucle de Sagnac (10) avec un appareil pour fournir une boucle de Sagnac alignée (10) pour une source de photons intriqués (1),
dans laquelle la boucle de Sagnac (10), formée par un premier séparateur de faisceau polarisant (11), et deux miroirs (12) disposés dans un premier et un deuxième chemin de sortie du premier séparateur de faisceau polarisant (11), formant un chemin dans le sens des aiguilles d'une montre et dans le sens inverse des aiguilles d'une montre pour le faisceau de photons (2) derrière le premier séparateur de faisceau polarisant (11),
dans laquelle l'appareil comprend
- une première source lumineuse (21) émettant un faisceau de photons polarisés (2),
**caractérisé en ce que**
l'appareil comprend en outre un deuxième séparateur de faisceau polarisant (22), dans laquelle le deuxième séparateur de faisceau polarisant (22) est disposé dans le troisième ou quatrième chemin de sortie du premier séparateur de faisceau polarisant (11),
tandis que sur un chemin de sortie réfléchissant du deuxième séparateur de faisceau polarisant (22)
a) une caméra (23) pour mesurer l'interférence, ou
b) un composant optique doté d'une surface permettant de surveiller l'interférence, ou
c) un wattmètre (24) pour mesurer la puissance,
est disposé.

11. Source de photons intriqués (1) comprenant une boucle de Sagnac (10) avec un appareil pour fournir une boucle de Sagnac alignée (10) pour une source de photons intriqués selon la revendication 10,
dans laquelle la source de photons intriqués (1) comprend en outre au moins les composants optiques suivants :
- un cristal non linéaire (13) pour produire des photons convertis vers le bas et un élément de changement de la polarisation (14) dans la boucle de Sagnac (10),
- un deuxième faisceau de photons polarisés pour générer des photons convertis vers le bas dans le cristal non linéaire (13),
- un premier moyen de couplage (31) et un miroir dichroïque (35) sur le chemin d'entrée du faisceau de pompe du premier séparateur de faisceau polarisant (11),
- un deuxième moyen de couplage (31) dans le quatrième chemin de sortie du premier séparateur de faisceau polarisant (11).
